# EUROPEAN PATENT SPECIFICATION

(11) **EP 3 080 025 B1**
(45) Date of publication and mention of the grant of the patent: **24.01.2024**
(21) Application number: 13899296.1
(22) Date of filing: 12.12.2013
(51) Int. Cl.: B66B 1/46, B66B 1/34

(54) **CONVEYANCE SYSTEM TRAFFIC FLOW INFORMATION**
VERKEHRSFLUSSDATEN FÜR FÖRDERSYSTEM
INFORMATIONS DE FLUX DE TRAFIC DE SYSTÈME DE TRANSPORT

(43) Date of publication of application: 19.10.2016
(73) Proprietor: Otis Elevator Company, Farmington CT 06032 (US)
(72) Inventor: THOMPSON, Mark Steven, Tolland, Connecticut 06084 (US)
(74) Representative: Dehns
(86) International application number: PCT/US2013/074518
(87) International publication number: WO 2015/088526

(56) References cited:
- EP-A1- 2 597 063
- KR-B1- 101 146 939
- KR-B1- 101 166 339
- KR-U- 20100 009 660
- US-A- 4 084 661
- US-A1- 2006 006 026
- US-A1- 2013 245 832
- US-A1- 2013 297 093
- US-B1- 7 093 693

## Description

### BACKGROUND

In terms of traffic flow within a building, conveyance devices (e.g., escalators, elevators, etc.) frequently represent so-called "pinch points" or "bottlenecks" for traffic into or out of the building. Indeed, users of an elevator departing a building may exit the elevator, request a service related to their departure (e.g., ground transportation), and then wait for the service request to be fulfilled. A substantial time delay may be incurred from the point in time when a user exits the elevator until the service request is fulfilled.

US 2013/0297093 describes an elevator system in which a user can be detected and identified and based on a database record for the user a personalized building action can be performed for the user. US 2023/0297093 discloses the preamble of claim 1.

US 7093693 describes a personnel transport device in which a user is detected, and a database is consulted to determine if the user is authorized to access a particular location. An authorized user can control lighting and environmental controls from the elevator. EP 2597063 describes an elevator reservation system which reserves an elevator based on a desired destination arrival time of a trip that includes both an elevator portion and an additional portion.

### BRIEF SUMMARY

According to one aspect, the invention provides a method according to claim 1.

According to another aspect, the invention provides a system according to claim 6.

Additional embodiments are described below.

### BRIEF DESCRIPTION OF THE DRAWINGS

The present invention is illustrated by way of example and not limited in the accompanying figures in which like reference numerals indicate similar elements.
FIG. 1 is a schematic block diagram illustrating an exemplary computing system in accordance with one or more embodiments;
FIG. 2 illustrates an exemplary block diagram of a system for obtaining traffic flow information to facilitate a provisioning of services in accordance with one or more embodiments;
FIG. 3 illustrates a flow chart of an exemplary method in accordance with one or more embodiments; and
FIG. 4 illustrates an exemplary environment in which one or more aspects of the invention may be implemented.

### DETAILED DESCRIPTION

It is noted that various connections are set forth between elements in the following description and in the drawings (the contents of which are included in this disclosure by way of reference). It is noted that these connections in general and, unless specified otherwise, may be direct or indirect and that this specification is not intended to be limiting in this respect. In this respect, a coupling between entities may refer to either a direct or an indirect connection.

Exemplary embodiments of apparatuses, systems, and methods are described for reducing or minimizing the time a user of a conveyance device (e.g., an elevator) has to wait for service. In some embodiments, elevator performance may be enhanced relative to conventional operations. In some embodiments, passenger information may be obtained earlier than is otherwise available, which may allow the elevator or a service provider to provision appropriate resources to reduce or minimize waiting times. This reduction in waiting time may improve user satisfaction or provide for a better user experience.

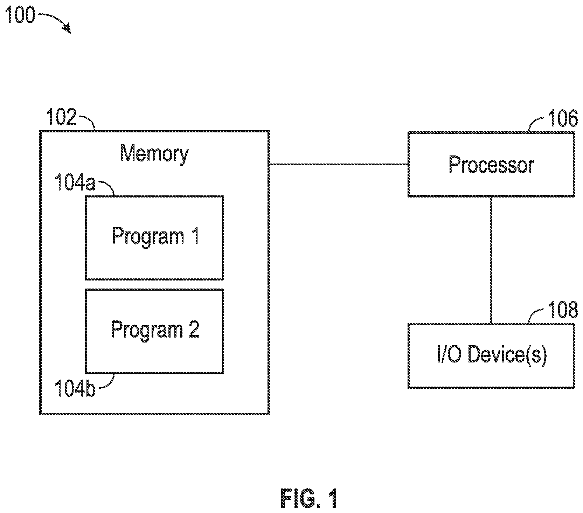

Referring to FIG. 1, an exemplary computing system 100 is shown. The system 100 is shown as including a memory 102. The memory 102 may store executable instructions. The executable instructions may be stored or organized in any manner and at any level of abstraction, such as in connection with one or more processes, routines, applications, procedures, methods, functions, etc. As an example, at least a portion of the instructions are shown in FIG. 1 as being associated with a first program 104a and a second program 104b.

The instructions stored in the memory 102 may be executed by one or more processors, such as a processor 106. The processor 106 may be coupled to one or more input/output (I/O) devices 108. In some embodiments, the I/O device(s) 108 may include one or more of a keyboard or keypad, a touchscreen or touch panel, a display screen, a microphone, a speaker, a mouse, a button, a remote control, a joystick, a printer, a telephone or mobile device (e.g., a smartphone), etc. The I/O device(s) 108 may be configured to provide an interface to allow a user to interact with the system 100.

The system 100 is illustrative. In some embodiments, one or more of the entities may be optional. In some embodiments, additional entities not shown may be included. For example, in some embodiments the system 100 may be associated with one or more networks, such as one or more computer or telephone networks. In some embodiments, the entities may be arranged or organized in a manner different from what is shown in FIG. 1.

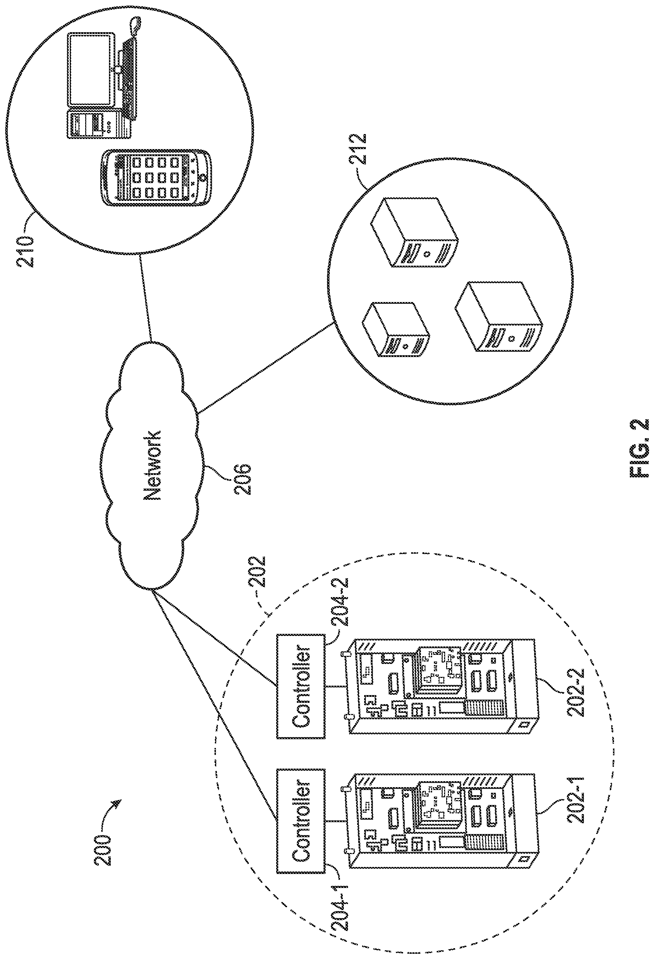

Turning now to FIG. 2, an exemplary system block diagram 200 in accordance with one or more embodiments is shown. The system 200 may include one or more elevators, such as elevators 202-1 and 202-2. The elevators 202-1 and 202-2 may be included in an elevator group 202. For example, the elevator group 202 may include some or all of the elevators at a particular location, such as a building. While two elevators 202-1 and 202-2 are shown in FIG. 2, an elevator group 202 may include more or less than two elevators. In some embodiments a controller (e.g., controller 204-1) may be integrated in an elevator (e.g., elevator 202-1).

The elevator group 202 may include one or more controllers, such as controllers 204-1 and 204-2. The controller 204-1 may be associated with the elevator 202-1. The controller 204-2 may be associated with the elevator 202-2. In some embodiments, the controllers 204-1 and 204-2 may be combined, such that a common controller may be associated with each of the elevators 202-1 and 202-2.

One or more of the controllers 204 may be coupled to one or more networks 206. In some embodiments, the network 206 may include a data network, a computer network, a telephone network, etc. The network 206 may be implemented in connection with a cloud computing platform. The network 206 may be coupled to one or more user devices 210, such as a desktop computer, a laptop computer, a mobile device (e.g., a cell phone or smartphone), etc. In some embodiments, a controller 204 may communicate with a user device 210 via the network 206. In some embodiments, a controller 204 may communicate with a user device 210, such that network 206 might not be included.

The system 200 may be used to schedule one or more services or resources. For example, a user associated with one or more of the user devices 210 may indicate that she is going to be arriving at a building housing an elevator 202 at a particular time via the user device 210. Such an indication may be provided in connection with a calendar associated with the user or the user device 210. Alternatively, the user's arrival at the building may be inferred or deduced based on the user's history. For example, if the user is employed by a company that is a tenant in the building then global positioning system (GPS) or other location techniques may be used to determine when the user is proximate to the building and might need elevator service on any given day.

Irrespective of the technique used to determine when a user is arriving at the building, a controller 204 (or other entity or computing device) may use such arrival information to schedule elevator service for the user. In some embodiments, the controller 204 may transmit a message to the user device 210 (potentially via the network 206) to indicate or identify a particular elevator car the user should take. Such a message may take one or more forms, such as a text message, an email, an instant message, an auditory message, etc.

Thus, as described above, a controller 204 (or other computing device or entity) may leverage passenger information to schedule elevator service (e.g., express elevator service, local elevator service, etc.). Such scheduling may be further enhanced if knowledge is obtained regarding the user's destination floor or landing within the building. The user's destination floor/landing may be obtained using techniques similar to those described above. For example, the user's destination floor/landing may be inferred.

Where a user is visiting a secure floor or landing in a building, obtaining knowledge of the user's visit in advance may be used to ensure that the user's credentials are authenticated or validated upon arrival at the floor/landing. Similarly, a greeter or other personnel may be stationed or positioned to welcome the user upon arrival at the floor/landing.

As described above, elevator service for a user may be scheduled in order to reduce or minimize the time the user has to wait for the elevator. Other types of services may be scheduled. For example, a user departing a building may need or desire ground transportation service (e.g., taxi service, train service, bus service, etc.) to another location (e.g., an airport). The need for such other services may be communicated from, e.g., the user device 210 to, e.g., the network 206, potentially based on one or more of the user requesting elevator service, a calendar associated with the user or user device 210, or inferred based on the user's history. The network 206 may be coupled to computing devices associated with other service providers 212 in order to schedule such other services (e.g., taxi service).

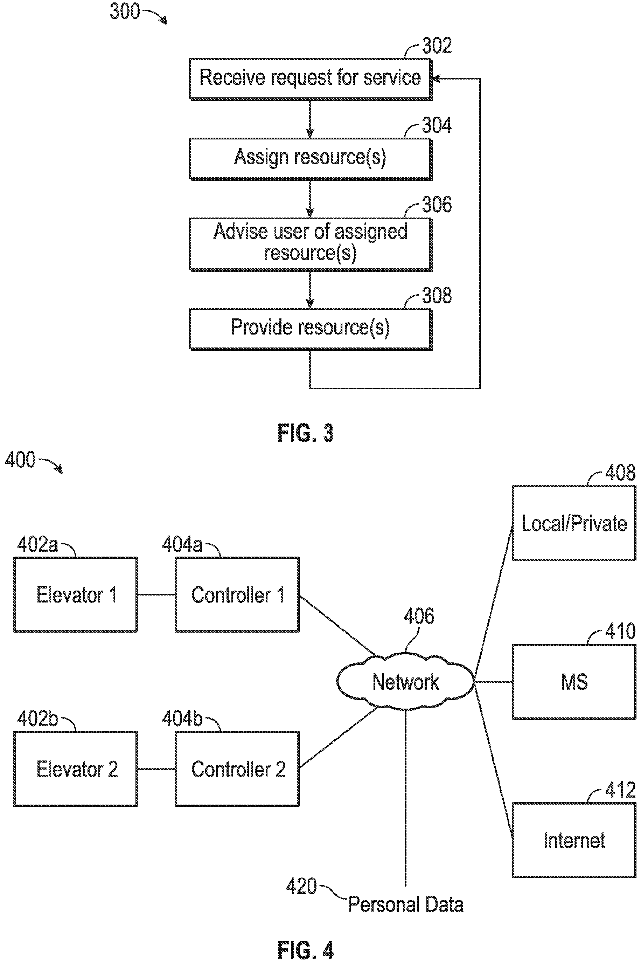

Turning now to FIG. 3, a method 300 is shown. The method 300 may be executed in connection with one or more systems, components, or devices, such as those described herein (e.g., the system 100, the controllers 204-1 and 204-2, the network 206, the user devices 210, the computing devices 212, etc.). The method 300 may be used to intelligently schedule one or more services, such as elevator access or service.

In block 302, a request for one or more services may be received. For example, a request for elevator service on behalf of a user may be received by a controller (e.g., controller 204). The request for service is inferred, based on a user's history.

In block 304, one or more resources may be allocated to fulfill the service request of block 302. For example, if a controller received the request of block 302, the controller may assign the user to a particular resource (e.g., a particular elevator car). The user-resource assignment may occur based on the total number of resources available in the system (e.g., total number of elevator cars available in the building), demand (e.g., total number of users requesting service), capacity (e.g., the number of users a given elevator car can accommodate), availability (e.g., the number of elevator cars free), commonality of resource use (e.g., common destination floors requested by users), etc.

As part of block 304, other services or resources may be scheduled or allocated, where such other services/resources may be unrelated to the use of the elevator itself. For example, ground transportation services may be scheduled for one or more users departing a building. For example, one or more car services (e.g., taxi, livery, valet) may be provided. Personnel or staff (e.g., building or tenant personnel or staff) may be allocated to assist the users upon their departure from the building. In terms of access, such as floor access, a greeter or host may be notified of an elevator passenger's impending arrival, or notification may be provided that a security badge has been processed and is available for pick-up. In terms of services that may be available in a building, a greeter or staff (e.g., restaurant staff) may be notified of an elevator passenger's impending arrival; such features may be useful in a lobby where a person waiting for an elevator passenger may receive notification (e.g., via a mobile device or a sign-board located in the lobby) of the passenger's impending arrival.

Data indicative of use of the elevator may be transmitted from a computing device or controller associated with the elevator to computing devices associated with the other service providers. The data may include an identification of one or more users, such that a service or resource may be assigned to the user(s).

In some instances, if the service request of block 302 cannot be accommodated by the system due to, e.g., a lack of resources, the user may be notified. Such notification may include a proposal that modifies the requested service. For example, if all the elevator cars in a given system are busy/occupied at a time when a user requests service the system may recommend a different time to the user to use the elevator system.

In block 306, the user may be advised of the resource assignment(s) of block 304. The advisement may take one or more forms, such as a message provided to a user device. The message may include one or more parameters, such as an identification of a time and location that the resource(s) will be available for the user's use.

In block 308, the system may make the assigned resource(s) of block 304 available to the user in accordance with the parameters of block 306.

The method 300 is illustrative. In some embodiments, one or more blocks or operations (or a portion thereof) may be optional. In some embodiments, the blocks may execute in an order or sequence different from what is shown in FIG. 3. In some embodiments, additional blocks not shown may be included.

Turning to FIG. 4, an exemplary environment 400 is shown in which one or more aspects of the invention may be implemented. The environment may include one or more elevators, such as a first elevator 402a and a second elevator 402b. The first elevator 402a may be located in a first building and the second elevator 402b may be located in a second building.

The first elevator 402a may be associated with a (first) controller 404a. The controller 404a may provide control in connection with a given elevator car or a group of elevator cars. In this respect, elevator 402a may represent a single elevator car or a group of elevator cars. The controller 404a may be located in the same building as the elevator 402a.

The second elevator 402b may be associated with a (second) controller 404b. The controller 404b may provide control in connection with a given elevator car or a group of elevator cars. In this respect, elevator 402b may represent a single elevator car or a group of elevator cars. The controller 404b may be located in the same building as the elevator 402b.

In some embodiments, the controller 404a and the controller 404b may be combined as a single controller.

One or both of the controllers 404a and 404b may communicate elevator access or elevator service request information to a network 406. In some embodiments, the network 406 may be implemented as a cloud network. Based on the information provided to the network 406, the network 406 may provide that information (potentially after processing or filtering by the network 406) to one or more entities, such as a local/private network 408, a management system (MS) network 410, or the Internet 412.

The local/private network 408 may be associated with a particular owner or tenant of an office space/location within a building. In this respect, the owner/tenant may be able to allocate resources or services to an elevator passenger who is about to arrive at the office space/location. An example would be an allocation of a greeter associated with (e.g., employed by) the owner/tenant meeting a passenger of an elevator.

The MS network 410 may be associated with a building in which an elevator car is located. In this respect, resources particular to a building may be allocated on a more general level via the MS network 410 relative to the local/private network 408. As an example, the MS network 410 may be used to allocate lobby services (e.g., bellhop or luggage handlers) to a group of elevator passengers leaving a conference held within a building, where the conference may have been conducted jointly by multiple tenants within the building.

The Internet 412 may be used to schedule services that might not be particular to the building and might not be particular to a particular person. As an example, an elevator passenger leaving a building may represent one of many potential clients for taxi or cab service. Those potential clients may originate from multiple buildings within a local geographical area.

The environment 400 is illustrative. In some embodiments, one or more of the entities may be optional. The entities may be organized in a manner or sequence that is different from what is shown. In some embodiments, one or more additional entities not shown may be included. In some embodiments, multiple instances of a given entity may be present. For example, in some embodiments, the local/private network 408 and the MS network 410 may be present for a given tenant in a building, for a given building, etc.

As shown in FIG. 4, an entity, such as the network 406, may accept data 420 that may be personal to a particular elevator passenger. Such personal data may be based on one or more of a radio frequency identification (RFID), a Bluetooth ID, biometrics (e.g., iris or fingerprint scan), an internet protocol (IP) address (e.g., tablet, laptop), global positioning system (GPS) coordinates, a "key" (e.g., a hotel or room key), etc. The personal data may be used to identify the elevator passenger from the potential pool of elevator passengers in order provide customized or tailored service. For example, if the personal data 420 indicates that "Jack Johnson" is an elevator passenger, a car valet service may be notified that Jack needs his vehicle. Of course, other types of services may be provided based on a determination of a passenger identity. As yet another example, a greeter at a restaurant may say words to the effect: "Good morning, Mr. Johnson. Would you like to sample our breakfast buffet?"

Aspects of the invention may be used to preserve energy associated with an elevator. For example, an elevator may be powered-down or in an idle state or sleep-mode due to a lack of use. In some embodiments, a determination may be made that it is likely that a person will request elevator service in an amount greater than a threshold - such a determination is based on user history and may be based on one or more of: the user being within a threshold distance of the elevator, the user walking in the direction of the elevator, a user access pattern associated with the elevator, etc. In any case, when a request for service is made or is likely, the elevator may be activated or turned-on. In this manner, power consumption may be reduced while not imposing any additional waiting time on elevator passengers.

Embodiments of the invention may be used to reduce or minimize the time (e.g., queue time) it takes for a user to be provided with a service. Accordingly, the user experience may be improved or enhanced. Knowledge or information regarding a user's request for one or more services may be obtained in advance of when the service(s) are actually needed, which may be exploited to schedule or assign resources for fulfilling the service request. Integration of one or more systems may facilitate such scheduling/assignment. Such scheduling may be used to anticipate and meet demand for resources, particularly during periods of peak demand wherein a large number of users may demand one or more services or resources in a relatively short time frame.

As described herein, in some embodiments various functions or acts may take place at a given location and/or in connection with the operation of one or more apparatuses, systems, or devices. For example, in some embodiments, a portion of a given function or act may be performed at a first device or location, and the remainder of the function or act may be performed at one or more additional devices or locations.

Embodiments may be implemented using one or more technologies. In some embodiments, an apparatus or system may include one or more processors, and memory storing instructions that, when executed by the one or more processors, cause the apparatus or system to perform one or more methodological acts as described herein. Various mechanical components known to those of skill in the art may be used in some embodiments within the scope of the appended claims.

Embodiments may be implemented as one or more apparatuses, systems, and/or methods. In some embodiments, instructions may be stored on one or more computer program products or computer-readable media, such as a transitory and/or non-transitory computer-readable medium. The instructions, when executed, may cause an entity (e.g., an apparatus or system) to perform one or more methodological acts as described herein.

Aspects of the invention have been described in terms of illustrative embodiments thereof. Numerous other embodiments, modifications and variations within the scope of the appended claims will occur to persons of ordinary skill in the art from a review of this disclosure.

## Claims

1. A method comprising:
receiving, by a computing device (100) comprising a processor (106), a request for elevator service; and
assigning at least one resource associated with a service unrelated to the use of the elevator (200; 202-1, 202-2) itself based on receiving the request for elevator service;
**characterized in that**:
the request for elevator service is inferred based on a user history; and **in that** the request for elevator service comprises an indication of a secure floor, and wherein
the at least one resource comprises a resource configured to validate a credential of a user upon arrival of an elevator car at the secure floor.

2. The method of claim 1, further comprising:
advising, by the computing device (100), a user device (210) of the assigned at least one resource.

3. The method of claim 2, wherein the computing device (100) advises the user device (210) of the assigned at least one resource by transmitting a message to the user device.

4. The method of claim 1, wherein the at least one resource comprises personnel or staff associated with a building in which the elevator (202) is housed.

5. The method of claim 1, wherein the request for elevator service is based on an affirmative or explicit request for service.

6. A system (200) comprising:
a plurality of elevators (202; 202-1, 202-2); and
at least one controller (204; 204-1, 204-2) configured to receive requests for service associated with the plurality of elevators and cause at least one resource associated with a service unrelated to the use of the elevators themselves to be assigned responsive to receiving the requests for service associated with the plurality of elevators;
wherein the requests for service are inferred based on a user history; and
the requests for elevator service comprise an indication of a secure floor, and wherein the at least one resource comprises a resource configured to validate a credential of a user upon arrival of an elevator car at the secure floor.

7. The system of claim 6, wherein the controller (204) is configured to receive the requests for service associated with the plurality of elevators (202) from user devices (210) over at least one network (206), and wherein the controller is configured to transmit data indicative of the requests for service associated with the plurality of elevators to at least one computing device associated a service provider that provides the service unrelated to the use of the elevators themselves.

8. The system of claim 6, wherein the at least one resource is customized to a passenger based on personal data.

9. The system of claim 8, wherein the personal data comprises at least one of a radio frequency identification (RFID), a Bluetooth ID, a biometric, an internet protocol (IP) address, global positioning system (GPS) coordinates, and a key.

10. The system of claim 6, wherein the at least one controller (204) is configured to cause information regarding the at least one resource to be provided to at least one of: a local/private network (408), a building management system network (410), and the Internet (412).

## Patentansprüche

1. Verfahren, Folgendes umfassend:
Empfangen einer Anforderung für einen Aufzugsdienst durch eine Rechenvorrichtung (100), die einen Prozessor (106) umfasst; und
Zuweisen mindestens einer Ressource, die einem Dienst zugeordnet ist, der nicht mit der Nutzung des Aufzugs (200; 202-1, 202-2) selbst zusammenhängt, basierend auf dem Empfang der Anforderung für einen Aufzugsdienst;
**dadurch gekennzeichnet, dass**:
die Anforderung für einen Aufzugsdienst basierend auf einer Benutzerhistorie abgeleitet wird; und dadurch, dass die Anforderung für einen Aufzugsdienst eine Angabe einer sicheren Etage umfasst, und wobei
die mindestens eine Ressource eine Ressource umfasst, die dazu konfiguriert ist, einen Berechtigungsnachweis eines Benutzers bei Ankunft einer Aufzugskabine auf der sicheren Etage zu validieren.

2. Verfahren nach Anspruch 1, ferner Folgendes umfassend:
Benachrichtigen einer Benutzervorrichtung (210) über die zugewiesene mindestens eine Ressource durch die Rechenvorrichtung (100).

3. Verfahren nach Anspruch 2, wobei die Rechenvorrichtung (100) die Benutzervorrichtung (210) über die zugewiesene mindestens eine Ressource benachrichtigt, indem eine Nachricht an die Benutzervorrichtung übertragen wird.

4. Verfahren nach Anspruch 1, wobei die mindestens eine Ressource Personal oder Mitarbeiter umfasst, die einem Gebäude zugeordnet sind, in dem der Aufzug (202) untergebracht ist.

5. Verfahren nach Anspruch 1, bei dem die Anforderung für einen Aufzugsdienst auf einer bestätigten oder expliziten Dienstanforderung beruht.

6. System (200), umfassend:
eine Vielzahl von Aufzügen (202; 202-1, 202-2); und
mindestens eine Steuerung (204; 204-1, 204-2), die dazu konfiguriert ist, der Vielzahl von Aufzügen zugeordnete Dienstanforderungen zu empfangen und als Reaktion auf das Empfangen der der Vielzahl von Aufzügen zugeordneten Dienstanforderungen zu bewirken, dass mindestens eine Ressource zugewiesen wird, die einem Dienst zugeordnet ist, der nicht mit der Nutzung der Aufzüge selbst zusammenhängt;
wobei die Dienstanforderungen basierend auf einer Benutzerhistorie abgeleitet werden; und
wobei die Anforderungen für den Aufzugsdienst eine Angabe einer sicheren Etage umfassen und wobei die mindestens eine Ressource eine Ressource umfasst, die dazu konfiguriert ist, einen Berechtigungsnachweis eines Benutzers bei Ankunft einer Aufzugskabine auf der sicheren Etage zu validieren.

7. System nach Anspruch 6, wobei die Steuerung (204) dazu konfiguriert ist, die der Vielzahl von Aufzügen (202) zugeordneten Dienstanforderungen von Benutzervorrichtungen (210) über mindestens ein Netzwerk (206) zu empfangen, und wobei die Steuerung dazu konfiguriert ist, Daten, die der Vielzahl von Aufzügen zugeordnete Dienstanforderungen angeben, an mindestens eine Computervorrichtung zu übertragen, die einem Dienstanbieter zugeordnet ist, der den Dienst unabhängig von der Nutzung der Aufzüge selbst anbietet.

8. System nach Anspruch 6, wobei die mindestens eine Ressource basierend auf persönlichen Daten an einen Fahrgast angepasst wird.

9. System nach Anspruch 8, wobei die persönlichen Daten mindestens eines der folgenden Elemente umfassen: eine Radiofrequenz-Identifikation (RFID), eine Bluetooth-ID, ein biometrisches Merkmal, eine Internetprotokoll(IP)-Adresse, GPS-Koordinaten und einen Schlüssel.

10. System nach Anspruch 6, wobei die mindestens eine Steuerung (204) dazu konfiguriert ist, zu bewirken, dass Informationen über die mindestens eine Ressource mindestens einem der folgenden Netzwerke bereitgestellt werden: einem lokalen/privaten Netzwerk (408), einem Gebäudeverwaltungssystemnetzwerk (410) und dem Internet (412).

## Revendications

1. Procédé comprenant :
la réception, par un dispositif informatique (100) comprenant un processeur (106), d'une demande de service d'ascenseur ; et
l'attribution d'au moins une ressource associée à un service sans lien avec l'utilisation de l'ascenseur (200 ; 202-1, 202-2) lui-même sur la base de la réception de la demande de service d'ascenseur ;
**caractérisé en ce que** :
la demande de service d'ascenseur est déduite sur la base d'un historique utilisateur ; et **en ce que**
la demande de service d'ascenseur comprend une indication d'un étage sécurisé, et dans lequel
l'au moins une ressource comprend une ressource conçue pour valider un identifiant d'un utilisateur à l'arrivée d'une cabine d'ascenseur à l'étage sécurisé.

2. Procédé selon la revendication 1, comprenant en outre :
la notification, par le dispositif informatique (100), d'un dispositif utilisateur (210) de l'au moins une ressource attribuée.

3. Procédé selon la revendication 2, dans lequel le dispositif informatique (100) notifie le dispositif utilisateur (210) de l'au moins une ressource attribuée en transmettant un message au dispositif utilisateur.

4. Procédé selon la revendication 1, dans lequel l'au moins une ressource comprend un personnel ou une équipe associés à un bâtiment dans lequel se trouve l'ascenseur (202).

5. Procédé selon la revendication 1, dans lequel la demande de service d'ascenseur est basée sur une demande de service affirmative ou explicite.

6. Système (200) comprenant :
une pluralité d'ascenseurs (202 ; 202-1, 202-2) ; et
au moins un dispositif de commande (204 ; 204-1, 204-2) conçu pour recevoir des demandes de service associées à la pluralité d'ascenseurs et faire en sorte qu'au moins une ressource associée à un service sans lien avec l'utilisation des ascenseurs eux-mêmes soit attribuée en réponse à la réception des demandes de service associées à la pluralité d'ascenseurs ; dans lequel les demandes de service sont déduites sur la base d'un historique utilisateur ; et
les demandes de service d'ascenseur comprennent une indication d'un étage sécurisé, et dans lequel l'au moins une ressource comprend une ressource conçue pour valider un identifiant d'un utilisateur à l'arrivée d'une cabine d'ascenseur à l'étage sécurisé.

7. Système selon la revendication 6, dans lequel le dispositif de commande (204) est conçu pour recevoir les demandes de service associées à la pluralité d'ascenseurs (202) provenant de dispositifs utilisateur (210) sur au moins un réseau (206), et dans lequel le dispositif de commande est conçu pour transmettre des données indicatives des demandes de service associées à la pluralité d'ascenseurs à au moins un dispositif informatique associé à un fournisseur de services qui fournit le service sans lien avec l'utilisation des ascenseurs eux-mêmes.

8. Système selon la revendication 6, dans lequel l'au moins une ressource est personnalisée pour un passager sur la base de données personnelles.

9. Système selon la revendication 8, dans lequel les données personnelles comprennent au moins l'un d'une identification par radiofréquence (RFID), d'un identifiant Bluetooth, d'une donnée biométrique, d'une adresse de protocole Internet (IP), de coordonnées de système de positionnement global (GPS) et d'une clé.

10. Système selon la revendication 6, dans lequel l'au moins un dispositif de commande (204) est conçu pour faire en sorte que des informations concernant l'au moins une ressource soient fournies à au moins l'un d'un réseau local/privé (408), d'un réseau de système de gestion de bâtiment (410) et d'Internet (412) .
